# EUROPEAN PATENT APPLICATION

(11) **EP 3 361 098 A1**
(43) Date of publication of application: **15.08.2018**
(21) Application number: 17155935.4
(22) Date of filing: 13.02.2017
(51) Int. Cl.: F04C 18/356, F01C 21/08, F01C 1/356, F01C 11/00, F02B 53/04

(54) **ROTARY ENGINE WITH A VANE ACTUATOR**

(71) Applicant: Stassinopoulou, Erini, 16675 Athens (GR); Stassinopoulou, Eleni, 16674 Athens (GR)
(72) Inventor: Stassinopoulos, Georgios, 16675 Athens (GR)
(74) Representative: Veni Swiss & European Patent Attorneys

(57) **Abstract**

A vane actuator arrangement for a rotary engine is described in which the vane is arranged to be rotationally static with respect to the rotor, and to reciprocate radially inwards and outwards such that the radial motion of the vane follows the eccentric rotary motion of the outer peripheral surface of the rotor (4). The vane actuator is configured to maintain the vane at a predetermined seal gap distance (A6) from the peripheral outer surface of the rotor. The vane actuator comprises a radial follower shaft (A3), arranged to translate eccentric rotation of the first rotor shaft into radial reciprocating motion of the follower shaft with respect to the stator chamber (A1), the follower shaft extending radially beyond the peripheral wall of the stator chamber.

## Description

### Field of the invention

The invention relates to the field of rotary piston arrangements for rotary engines, compressors or pumps.

### Background of the invention

Rotary engines are well known and have been developed in various configurations, the most famous of which is the Wankel engine. Common to all rotary engines is the provision of two or more variable-volume chambers formed between a rotor and the walls of the stator chamber in which the rotor rotates. The volume of each chamber varies as the rotor rotates in the stator. The Wankel design defines three chambers, isolated from each other by the contact between the triangular rotor's three apexes and the oval chamber wall. All phases of the four-stroke engine cycle are implemented by the three variable-volume chambers. Disadvantages of the Wankel rotor design are its complex eccentric rotor bearing and the continuous lateral displacement of the rotor mass, which expends energy and promotes wear and vibration. Other rotary piston arrangements have been proposed with a view to providing rotary engines with simpler, balanced rotor construction and improved performance.

### Prior art

American patent US4638776 describes a twin-rotor engine which has two cooperating rotors arranged adjacent to each other and communicating via a connecting channel. The first eccentric rotor rotates inside a first (compression) chamber so as to draw in a fuel/air mixture during a first part of the cycle (intake) and then compresses the mixture during a second part of the cycle (compression). The compressed mixture is then expelled into a second (combustion) rotor chamber via the connecting channel, whereupon the mixture is detonated in a third part of the cycle (power) and then expelled through an exhaust port in a fourth part of the cycle (exhaust). The rotors of US4638776 are equipped with radial vanes providing a low-friction seal between the rotor and the stator (chamber). These vanes are arranged to move radially outward and inward from the rotor, synchronised with the eccentric motion of the rotor, so as to maintain a small but constant gap distance between the vane tip and the inner peripheral wall of the chamber. This vane is moved in and out by a pin which engages in a circular slot in the side wall of the chamber. This vane drive arrangement is subject to wear, and is difficult to access for adjustment and repair. Furthermore, the vane and the drive arrangement embody an eccentric and radially-mobile mass and exert radial forces on the rotor which are complicated to compensate and contribute to an imbalance in the rotor.

### Brief description of the invention

The present invention aims to overcome at least some of the above disadvantages of prior art engines such as the one described above. To this end, the invention foresees a rotary engine as described in claim 1. Further variants of the invention are set out in the dependent claims. The inventive reciprocating vane drive (follower shaft) arrangement, with the moving vane seal effected with a predetermined (but very small) gap at the rotor surface instead of at the chamber wall, allows a rotor construction which is simpler, lighter and better balanced. It also permits easier access for maintenance, adjustment and repair of the vane seal and the reciprocating vane drive mechanism.

### Brief description of the drawings

The above and other advantages of the invention will be described in detail with reference to the attached drawings, in which:
Figure 1 shows in cross-section, in the plane D-D indicated in figure 7, an example of a first (compression) rotor in a twin-rotor engine using a vane actuator according to the present invention.
Figure 2 shows in cross-section, in the plane B-B indicated in figures 7 and 9, an example of a second (combustion) rotor in a twin-rotor engine using a vane actuator according to the present invention.
Figure 3 shows in cross-section, in the planes F-F indicated in figures 2 and 7, the first and second rotors of figures 1 and 2.
Figure 4 shows in cross-section, in the plane G-G indicated in figures 2 and 7, the rotary engine of figures 1 to 3.
Figure 5 shows in cross-section, in the plane C-C indicated in figure 7, the rotary engine of figures 1 to 4.
Figure 6 shows in cross-section, in the plane A-A indicated in figures 7 and 9, the rotary engine of figures 1 to 5.
Figure 7 shows a plan view of the rotary engine of figures 1 to 6.
Figure 8 shows a side elevation view, in the plane indicated by E-E in figure 7, of the rotary engine of figures 1 to 7.
Figure 9 shows a variant of the tangential seal used in the engine of figures 1 to 8.
Figure 10 shows how two engines of the type illustrated in figures 1 to 8 can be arranged coaxially, back-to-back, sharing a common main shaft and vane actuator.

The figures are provided merely as an aid to understanding the principles underlying the invention, and should not be taken as limiting the scope of protection sought. Where the same reference numbers are used in different figures, these are intended to indicate similar or equivalent features. It should not be assumed, however, that the use of different reference numbers is intended to indicate any particular degree of difference between the features to which they refer.

### Detailed description of the invention

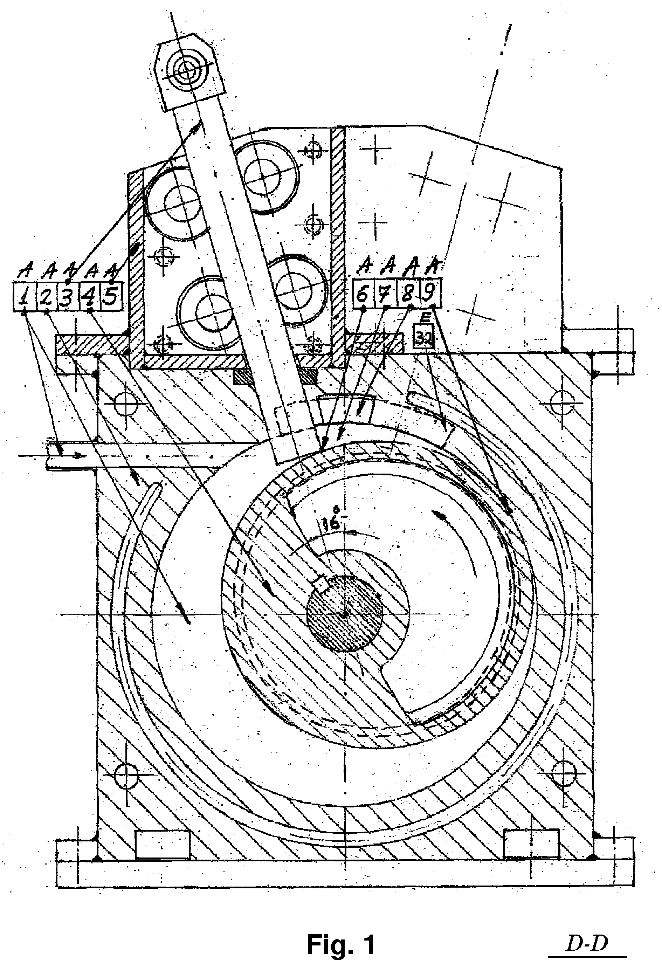

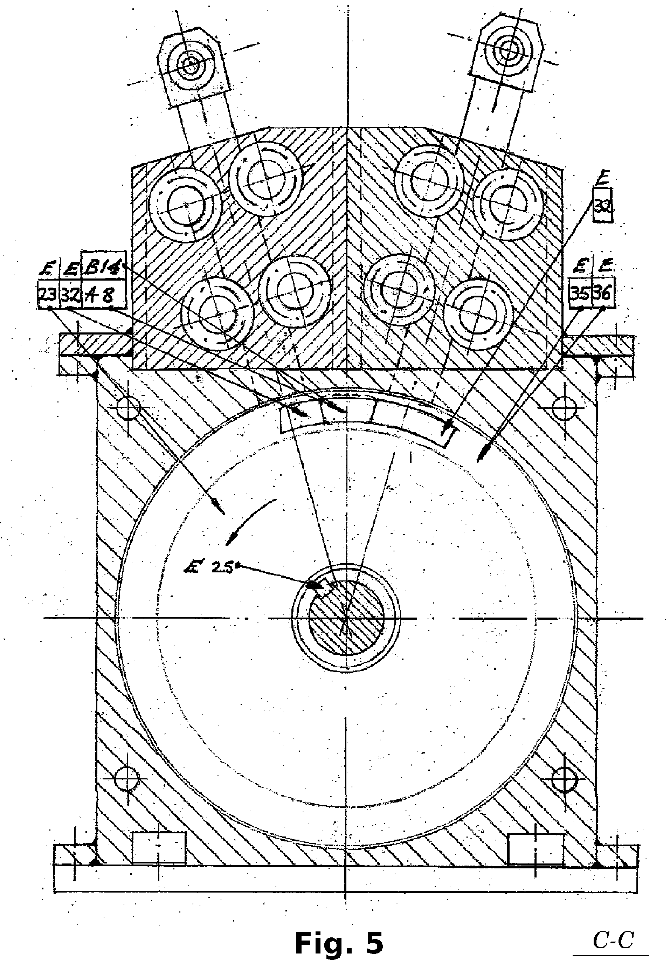

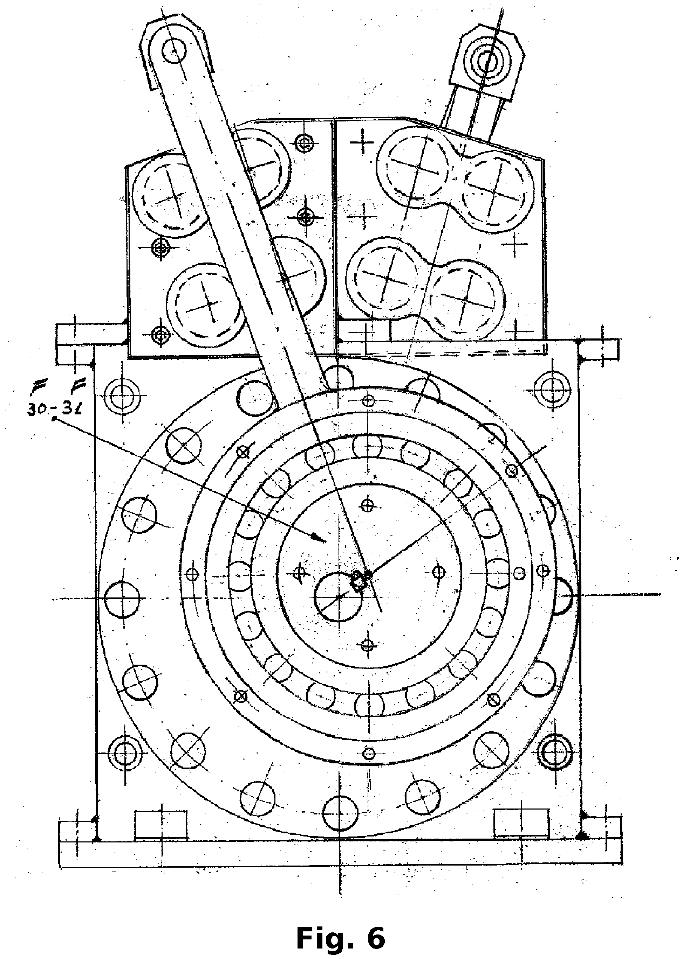

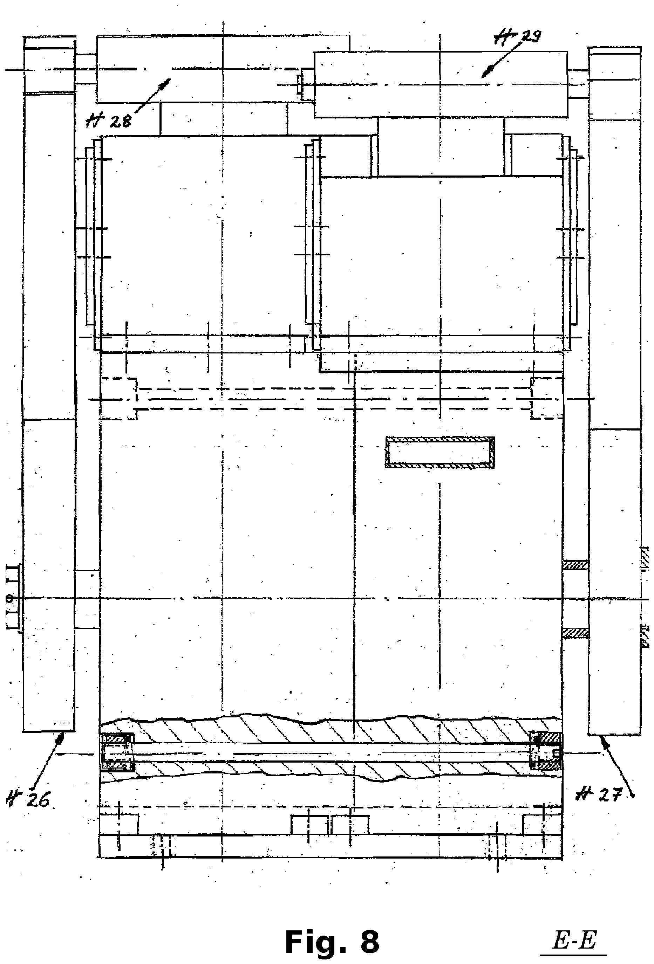

Figures 1 to 8 show different views of the same example implementation of a twin-rotor rotary engine employing a vane actuator according to the present invention. Reference numbers are used consistently throughout, but not all reference number are included in every view for the sake of clarity. An index of the reference numbers is provided at the end of this description.

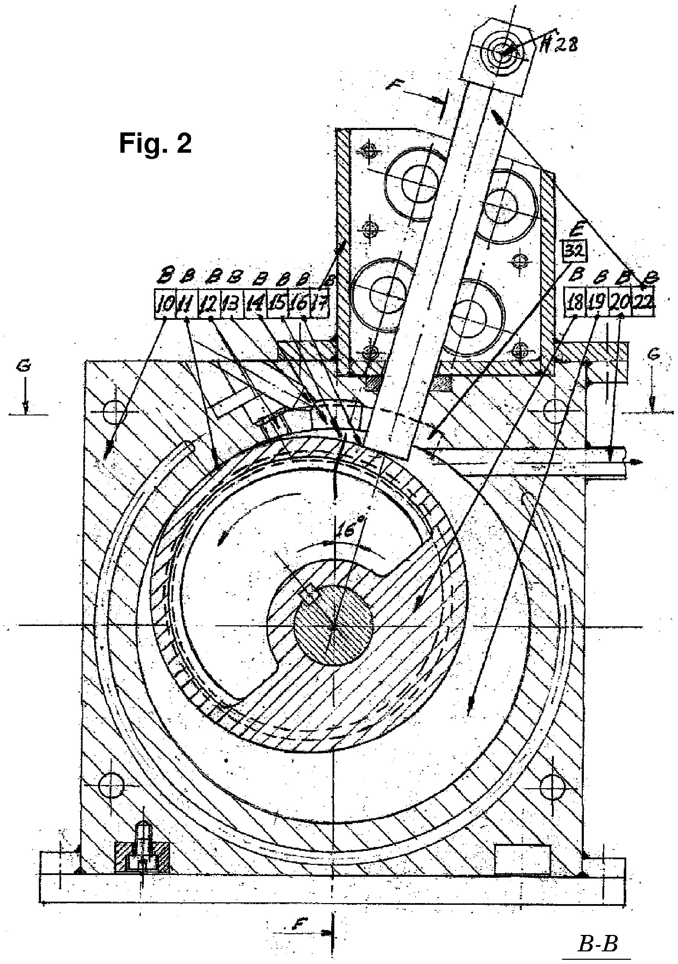

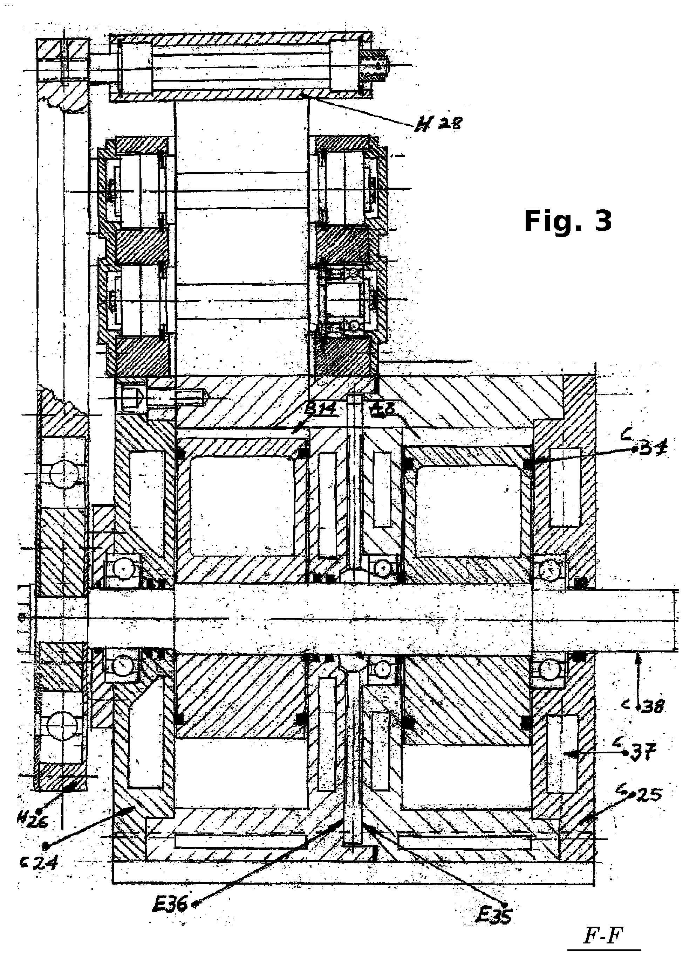

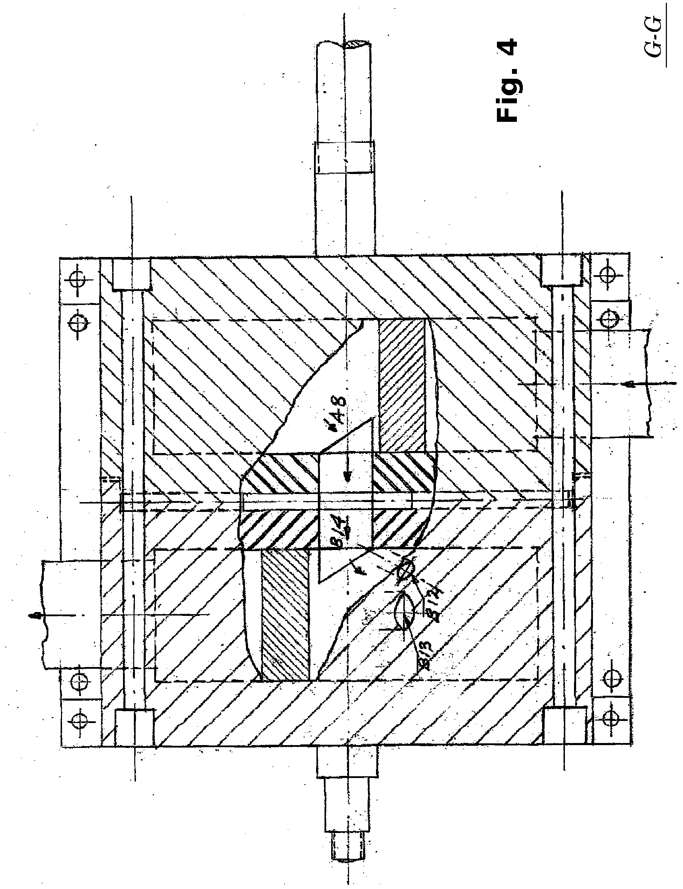

The example implementation is a four-cycle internal combustion engine working with eccentric rotors instead of conventional reciprocating pistons. It comprises two rotor-stator assemblies; a compression rotor-stator assembly is illustrated in figure 1, and a combustion rotor-stator assembly is illustrated in figure 2. The two assemblies are arranged with coaxial stator chambers which are connected for fluid communication by means of a connecting channel A8/B14. The connecting channel is opened and closed by an opening E32 in a valve disc E23 located between the two assemblies and arranged to rotate with the main shaft C38. Each assembly comprises a stator chamber with a central main shaft and a peripheral inner wall concentric with the main shaft, and an eccentric rotor mounted on the main shaft such that the most remote part of its outer peripheral surface from the rotation axis touches or almost touches the inner peripheral wall of the stator chamber at point A9. The outer peripheral surface of the rotor, and the inner peripheral wall of the stator chamber are both cylindrical. The compression rotor A4 shown in figure 4 is shaped such that its centre of gravity coincides with the centre axis of the main shaft. Balancing may be achieved by machining one or more hollow regions in the rotor, for example. Side seals are provided between the side walls of the rotor and the side walls of the stator chamber. These are indicated by dotted lines in figures 1 and 2, and by C34 in figure 3. They are shown as being concentric with the circular shape of the rotors. Alternatively, they may preferably be arranged concentrically with the main shaft C38. According to one variant, the balancing may be achieved by shaping or configuring all of the components of the vane actuator (eg including the actuator rotor, the bearing, the follower shaft, the pivot, the vane shaft and the vane) such that their total net rotational centre of gravity coincides with the axis of rotation of the main shaft.

The usable stator volume (ie the part outside the rotor periphery) is divided into two sub-volumes, A1 and A7, by vane seal A6 and tangential seal A9. Vane seal A6 is formed at the tip of vane A3, which is held in almost-contact with the eccentrically-rotating surface of rotor A4 by vane actuator means which will be described in more detail below. Tangential seal A9 is formed by the close proximity between the peripheral surface of the rotor and the peripheral wall of the stator chamber. Additional seal components such as packing or a sprung seal, may be included as will be discussed below. Sub-volume A1 is the air-intake volume; as the rotor rotates in the direction of the arrow, the increasing volume of sub-volume A1 draws air in through the air intake channel. At the same time, air drawn in during the previous rotation is being compressed in compression volume A7 by the rotation of the rotor A4. The compressed air is allowed through the connecting channel A8 when the opening E32 in the valve disc E23 coincides with the connecting channel A8. Guide A5 and vane A3 are positioned adjacent to and rotationally after the connecting channel A8, so that the air in sub-volume A7 reaches its maximum compression at the point in the rotation cycle where the valve disc opens to allow the compressed air into the connecting channel. As it passes through the connecting channel A8/B14 and into the adjacent (combustion) rotor-stator assembly, fuel is sprayed or misted into the airflow.

In order to achieve satisfactory compression, the vane seal A6 is preferably maintained at a very small distance (eg less than 0.3 mm or less than 0.1 mm, or less than 0.06 mm), ie almost touching the surface of the rotor. Lubricant may be supplied to the vane tip and/or the rotor surface in order to improve the sealing properties of the very small vane seal gap A6. Vane A3 is mounted so that its shaft can reciprocate radially, running in guide means A5 (eg between two pairs of rollers mounted in bearings, as shown). A fluid seal is also provided around the vane shaft A3 such that the vane shaft can move radially in and out without any fluid losses around the vane shaft.

Figure 2 shows the combustion rotor-stator assembly, which operates in a similar manner to the compression assembly except that the sub-volumes B15 and B19 vary inversely with respect to their counterpart sub-volumes A1 and A7 of the compression assembly. In this example, the two rotors are both rotationally fixed to the same main shaft C38, but with the combustion rotor leading the compression rotor by an offset angle of approximately 90°. Fuel is introduced (eg sprayed or atomised) into the compressed air flowing through the connecting channel B14 by fuel injection nozzle B13. The vane shaft guide B17 and the vane shaft B22 which maintains the vane seal gap B16 are configured so that the vane is positioned adjacent to and rotationally before the connecting channel so that the compressed air and fuel which emerge from the connecting channel B14 do so at the point in the cycle at which the volume of sub-volume B15 is at or near a minimum. The fuel-air mixture is the detonated by the ignition spark B12, thereby providing drive force on the rotor B18. Meanwhile, sub-volume B19 contains the exhaust gases from the previous detonation, which are then expelled through exhaust channel B20.

In the illustrated example, the compression and combustion vanes are angularly positioned 16° before and 16° after the centre-line of the connecting channel, but other angular positions could be used. The angular separation of the two vanes is thus 32° in this example. This angular separation may preferably be less than 40°, or more preferably less than 30°, or more preferably less than 25° in order to minimise the instantaneous size of the space created temporarily by the combined volumes of the compression sub-volume A7, the detonation sub-volume B15 and the volume of the connecting channel A8/B14.

The tips of the vanes A3 and B22, which form fluid-tight pressure seals A6 and B11 by their proximity with the peripheral surface of the rotors A4 and B18 respectively, are shown as planar surfaces, in this case perpendicular to the longitudinal axis of the vane shaft. However, other configurations of vane tip may be used. The substantially planar tip configuration allows different parts of the tip surface to come into contact or almost-contact with the rotor surface at different parts of the rotational cycle. This may be useful, for example, if different gap tolerances or different surface textures are needed at different parts of the cycle. The angle of inclination of the vane shaft (shown as 16° in the example), and the angle of the vane tip surface to the vane shaft longitudinal axis may be selected so that any mechanical distortion of the vane due to high pressure in the sub-chamber A7 or B15 tends to decrease rather than increase the vane gap separation distance from the rotor surface. thereby improving the sealing function at high pressures.

Figures 3, 6 and 8 show how the vane actuators may be configured to ensure that the vanes closely follow their respective rotor surfaces. The shaft of each vane is connected by a pivot or hinge H28 to a reciprocating follower shaft rotatably mounted on an eccentric actuator rotor, concentric with the corresponding rotor A4 or B18 and coaxial with the main shaft, so as to rotate with the main shaft. The actuator rotor H26, H27 may comprise ball or roller bearings for smooth, reliable operation. As with the rotors A4 and B18, the actuator rotors and bearings may be shaped so as to be rotationally balanced, having a centre of gravity which coincides with the axis of rotation. Note that the actuator rotor need not have the same radius as the corresponding rotor A4 or B18, however the rotors' eccentricity (distance of rotation axis from centre axis), and their rotational position on the main shaft should be the same.

Alternatively, the actuator may be implemented as a cam-follower, with the eccentric actuator functioning as a cam, and with the follower shaft biased towards the cam surface eg by a spring. A cam arrangement allows for non-cylindrical rotors. It can also permit fine-tuning of the radial vane motion at different parts of the rotor rotation cycle such that, for example, the vane seal gap distance can be varied at different parts of the cycle. Thus, the vane seal gap can be made tight during high-pressure parts of the cycle, and looser in lower-pressure parts of the cycle. It also allows the vane seal gap to be further increased in very localised regions, for example in order to avoid mechanical interference with the tangential seal as it rotates past the vane tip.

As an alternative to the cam arrangement, the vane shaft or the follower shaft can be provided with elongation-adjustment means for adjusting or fine-tuning the radial position of the vane relative to the centre axis of the actuator rotor (and therefore relative to the outer peripheral surface of the main rotor A4, B18. The elongation adjustment means may be mechanical, or thermo-mechanical, for example, and may be controlled to adjust the shaft elongation in dependence on predetermined parameters such as the surface profile of the main rotor, or on dynamic parameters, such as temperature or thermal expansion eg of the rotor.

While the embodiments are described here as having a finite predetermined or controllable vane seal gap, the vane shaft may alternatively be provided with a vane which is biased radially towards the rotor surface so as to make low friction contact with the rotor surface during operation.

Figures 3, 4 and 5 also illustrate the operation of the valve disk E23, rotationally mounted on the main shaft and provided with side faces E35 and E36 which are sealed for example mechanically, with tight tolerances, with a seal (not shown) and/or with a sealing lubricant against the outer side faces of the two stator chambers. Valve disk E23 is provided with an opening which is configured to coincide with the fluid connection channel A8/B14 for a short part of the rotation cycle to allow compressed air from the compression chamber to enter the combustion chamber. Fuel is also introduced into the compressed air through nozzle B13. Once the channel A8/B14 has been closed again by the rotation of the opening E32 past the channel, the fuel/air mixture is detonated by ignition B12. In this way, the illustrated configuration achieves one power stroke per rotor revolution. Note that the two or more sets of air intake, vane, vane actuator, channel, fuel inlet, ignition and exhaust port can be provided at different points around the stator chamber, sharing a common rotor, actuator rotor, stator chamber, valve disc opening E32 and main shaft. In this way, multiple power strokes can be achieved in one revolution.

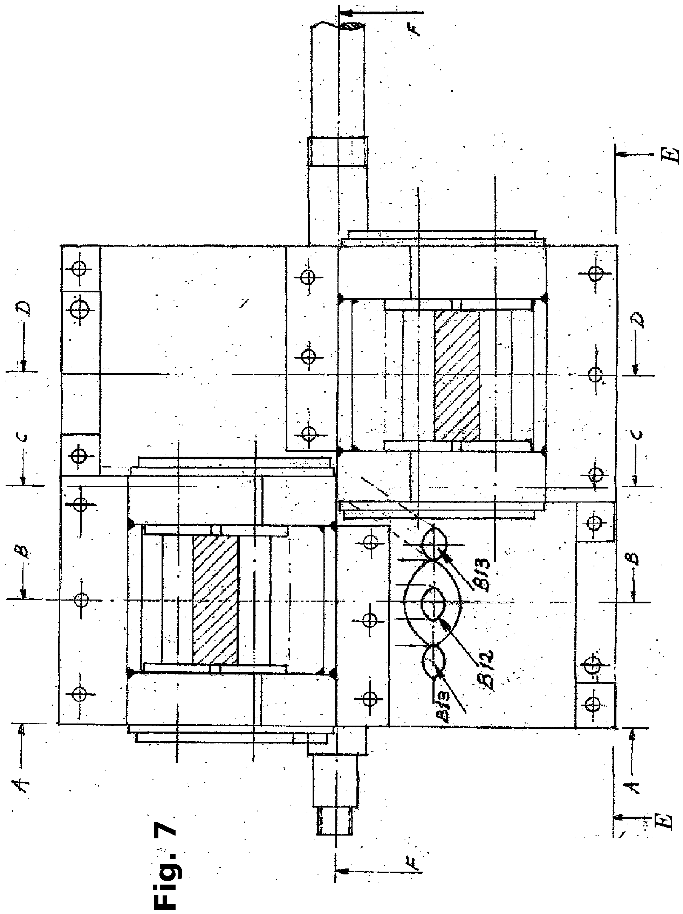

Figure 7 also shows an arrangement in which multiple (two in this example) fuel injectors are used to achieve good mixing of air and fuel.

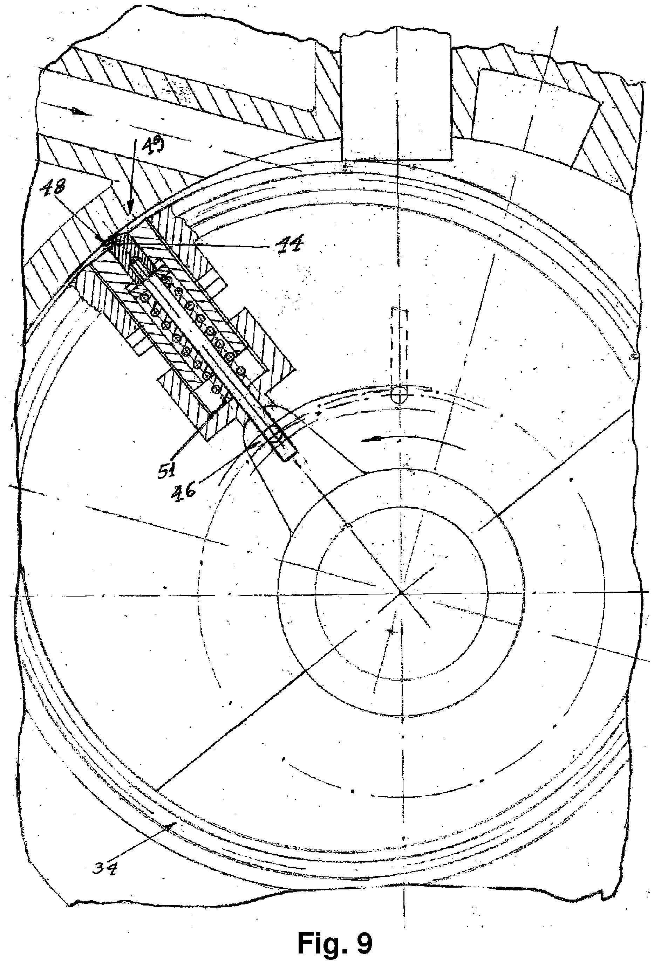

Figure 9 shows a variant of the compression rotor in which the tangential seal 48 (which corresponds to seals A9 and B11) is implemented as a radially-mobile vane 44 with a radial-outward biasing spring 51 and a control pin 46 engaging with a control surface (eg the outer peripheral surface of a substantially circular groove in the side wall of the stator chamber) to maintain the desired vane seal gap distance of the tangential seal 38. As described above in relation to a variant of the vanes A3 and B22 and associated vane actuators, the radially-mobile tangential vane 48 may be moved to follow a trajectory which is not purely cylindrical. This means that the stator periphery wall may be non-cylindrical (eg non-circular). It also means that tangential vane seal gap may be varied in dependence on dynamic parameters such as temperature, thermal expansion etc. It also means that the van seal gap may be increased in particular parts of the rotation in order to avoid mechanical interference, for example with the stator vane A3/B22 or the air intake or exhaust port.

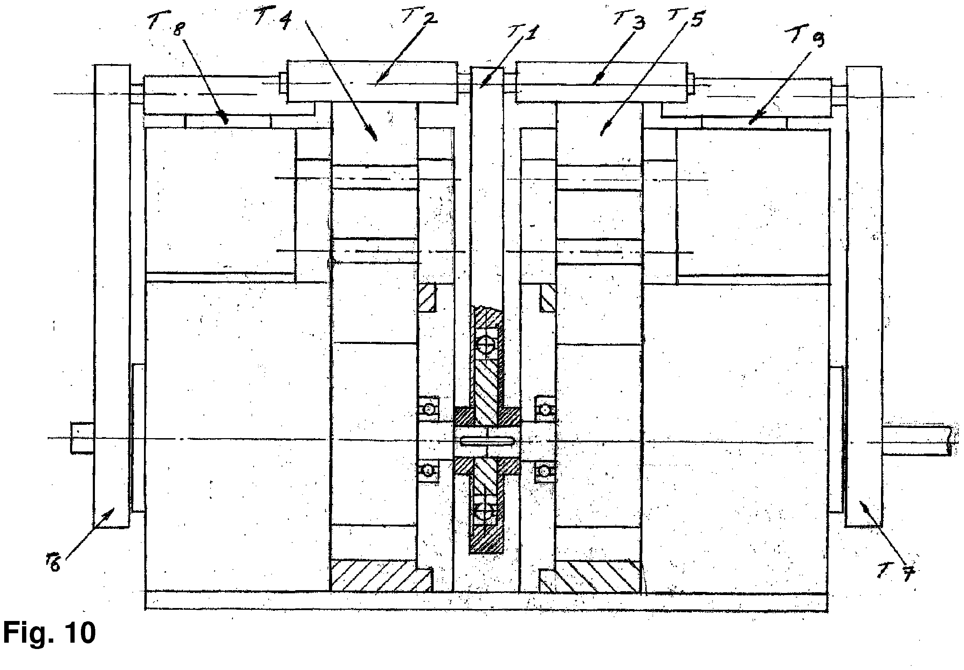

Figure 10 shows how two twin-rotor engine (or equivalent pump or compressor) assemblies such as that shown in figures 1 to 8 can be mechanically coupled, back to back, so as to share a common main shaft and a common actuator shaft. The first (lefthand) twin-rotor assembly comprises two vane shafts T4 and T8, while the second (righthand) twin-rotor assembly comprises two vane shafts T5 and T9. The vane shafts T4 and T5 are connected to one common follower shaft T1 by pivots T2 and T3 respectively.

### Index of reference numbers used in the drawings

- A1: Air intake channel, first (intake) volume
- A2: First stator block
- A3: First vane shaft
- A4: First (compression) rotor
- A5: First vane shaft guide
- A6: First vane seal
- A7: Second (compression) volume
- A8: Communication channel opening
- A9: First tangential seal
- B10: Second stator block
- B11: Second tangential seal
- B12: Ignition
- B13: Fuel injection
- B14: Communication channel
- B15: Third (detonation) volume
- B16: Second vane seal
- B17: Second vane shaft guide
- B18: Second (combustion) rotor
- B19: Fourth (exhaust) volume
- B20: Exhaust port
- B22: Second vane shaft
- C24: Second stator outer side wall
- C25: First stator outer side wall
- C34: Lateral seal between rotor and stator side-wall
- C37: Coolant channel
- C38: Main shaft
- E23: Valve disc
- E25: Key and keyway (valve disc)
- E32: Valve disc opening
- E35: First side face of rotating valve disc
- E36: Second side face of rotating valve disc
- F30: First vane actuator rotor
- F32: Second vane actuator rotor
- H26: Second follower shaft eccentric and bearing
- H27: First follower shaft eccentric and bearing
- H28: Second vane actuator connecting pivot axle
- H29: First vane actuator connecting pivot axle
- T1: Common first vane actuator follower
- T2: First actuator pivot of first twin-rotor engine
- T3: First actuator pivot of second twin-rotor engine
- T4: First vane shaft of first twin-rotor engine
- T5: First vane shaft of second twin-rotor engine
- T6: Second vane actuator follower of first twin-rotor engine
- T7: Second vane actuator follower of second twin-rotor engine
- T8: Second vane shaft of first twin-rotor engine
- T9: Second vane shaft of second twin-rotor engine
- 44: Radial rotor vane
- 46: Guide surface for control pin
- 48: Tangential seal gap
- 49: Stator chamber peripheral wall
- 51: Biasing spring

## Claims

1. Vane actuator (A3, H26, H28) for a rotary engine, pump or compressor, wherein the rotary engine, pump or compressor comprises a rotor (A4) arranged to rotate eccentrically in a stator chamber and a radially-mobile first vane (A3) for providing a first fluid seal (A6) between an outer peripheral surface of the rotor (A4) and an inner peripheral wall of the stator chamber, and a second fluid seal (A9) at a region of maximum proximity between the outer peripheral surface of the rotor (A4) and the inner peripheral wall of the stator chamber, such that the first and second fluid seals delimit at least a first chamber portion (A1) and a second chamber portion (A7) of the stator chamber,
**characterised in that**:
the vane actuator (A3, H26, H28) is configured for moving the first vane (A3) radially inwards and outwards such that the radial motion of the vane (A3) follows the eccentric rotary motion of the outer peripheral surface of the first rotor (A4), whereby the first vane (A3) is substantially rotationally static with respect to the stator chamber, and
the vane actuator (A3, H26, H28) is configured to support the vane (A3) with a first vane seal gap between the first vane (A3) and the peripheral outer surface of the rotor (A4).

2. Vane actuator (A3, H26, H28) according to claim 1, comprising a radial follower shaft arranged to translate eccentric rotation of the rotor (A4) into radial reciprocating motion of the follower shaft.

3. Vane actuator (A3, H26, H28) according to claim 2, wherein the follower shaft extends radially beyond the peripheral wall of the stator chamber.

4. Vane actuator (A3, H26, H28) according to one of the preceding claims, comprising radial adjustment means for adjusting the first vane seal gap.

5. Vane actuator (A3, H26, H28) according to claim 4, wherein the radial adjustment means comprises compensation means for automatically adjusting the first vane seal gap in dependence on variations in radius of the rotor and/or of the stator chamber.

6. Vane actuator (A3, H26, H28) according to one of the preceding claims, wherein the inner peripheral wall of the stator chamber is cylindrical, having a first constant radius, whereby the second fluid seal is formed by the proximity between the peripheral surface of the rotor and the cylindrical peripheral wall of the stator chamber.

7. Vane actuator (A3, H26, H28) according to one of claims 1 to 5, wherein at least one of the rotor and the stator chamber is non-cylindrical.

8. Vane actuator (A3, H26, H28) according to one of the preceding claims, wherein the second fluid seal comprises a radially mobile sealing vane.

9. Vane actuator (A3, H26, H28) according to claim 8, comprising a rotor vane actuator means for urging the radially mobile sealing vane radially outward, and for controlling a radial extension of the radially mobile sealing vane beyond the peripheral rotor surface.

10. Vane actuator (A3, H26, H28) according to one of the preceding claims, comprising an eccentric actuator rotor (H26) having the same eccentricity as the rotor (A4), and mounted on the same main shaft (C38), wherein the rotor (A4) and/or the actuator rotor (H26) are formed such that their rotational centres of gravity are coincident with the axis of rotation of the main shaft (C38).

11. Rotor-stator assembly for a rotary engine, compressor or pump, comprising:
a rotor (A4) arranged to rotate eccentrically in a stator chamber and a radially-mobile first vane (A3) for providing a first fluid seal (A6) between an outer peripheral surface of the rotor (A4) and an inner peripheral wall of the stator chamber, and a second fluid seal (A9) at a region of maximum proximity between the outer peripheral surface of the rotor (A4) and the inner peripheral wall of the stator chamber, such that the first and second fluid seals delimit at least a first chamber portion (A1) and a second chamber portion (A7) of the stator chamber,
wherein the vane actuator (A3, H26, H28) is configured for moving the first vane (A3) radially inwards and outwards such that the radial motion of the vane (A3) follows the eccentric rotary motion of the outer peripheral surface of the first rotor (A4), whereby the first vane (A3) is substantially rotationally static with respect to the stator chamber, and
the vane actuator (A3, H26, H28) is configured to support the vane (A3) with a first vane seal gap between the first vane (A3) and the peripheral outer surface of the rotor (A4).

12. Rotor-stator assembly according to claim 11, wherein the first and/or second vane seal gap is less than 0.3 mm, or preferably less than 0.1 mm, or more preferably less than 0.06 mm.

13. Rotor engine comprising:
a first rotor-stator assembly according to one of claims 11 or 12, configured such that its first chamber portion (A1) is for performing an intake part of a four-stroke engine cycle, and its second chamber portion (A7) is for performing a compression part of the engine cycle,
a second rotor-stator assembly according to one of claims 11 or 12, configured such that its first chamber portion (B15) is for performing a detonation part of a four-stroke engine cycle, and its second chamber portion (B19) is for performing an exhaust part of the engine cycle,
a connecting fluid channel (A8, B14) for conveying compressed air from the second chamber portion (A7) of the first rotor-stator assembly into the first chamber portion (B15) of the second rotor-stator assembly,
a rotary disc valve (E23) for opening or blocking the fluid channel (A8, B14) at predetermined parts of the engine cycle,
whereby the disc valve (E23) and the rotors (A4, B18) of the first and second rotor assemblies are mounted on a common main shaft (C38).

14. Rotor engine according to claim 13, comprising at least one fuel inlet (B13) arranged for introducing fuel into the fluid channel (A8, B14) on a combustion side (B14) of the disc valve (E23)

15. Multiple rotor engine comprising two or more rotor engines according to claims 13 or 14, configured to share a common main shaft (C38) and a common vane actuator.
